# EUROPEAN PATENT APPLICATION

(11) **EP 2 104 025 A2**
(43) Date of publication of application: **23.09.2009**
(21) Application number: 09150249.2
(22) Date of filing: 08.01.2009
(51) Int. Cl.: G06F 3/048

(54) **Virtual Key Input Method**

(30) Priority: 20.03.2008 TW 97109863
(71) Applicant: E-Ten Information Systems Co., Ltd., Taipei 114 (TW)
(72) Inventor: Stewart, Jonathan Douglas, Kettering, Northamptonshire NN14 4HJ (GB)
(74) Representative: Jenkins, Peter David

(57) **Abstract**

A virtual key input method includes displaying a small virtual key (41) that is marked with at least a first symbol (42), and displaying a large virtual key (41') that is marked with a plurality of second symbol (42'), that replaces the small virtual key (41), and that has a size larger than the small virtual key (41). An electronic device (2) that performs the virtual key input method is also disclosed.

## Description

This invention relates to a virtual key input method, more particularly to a virtual key input method that emulates a physical keyboard.

A virtual keyboard, which emulates a physical keyboard, is commonly used in a mobile device equipped with a touch screen, such as a personal digital assistant (PDA) or a mobile phone. The touch screen may be of the capacitive type, the resistive type, or the wave type. However, since the conventional virtual keyboard has a reduced size compared to its counterpart physical keyboard, typing on the conventional virtual keyboard is error prone.

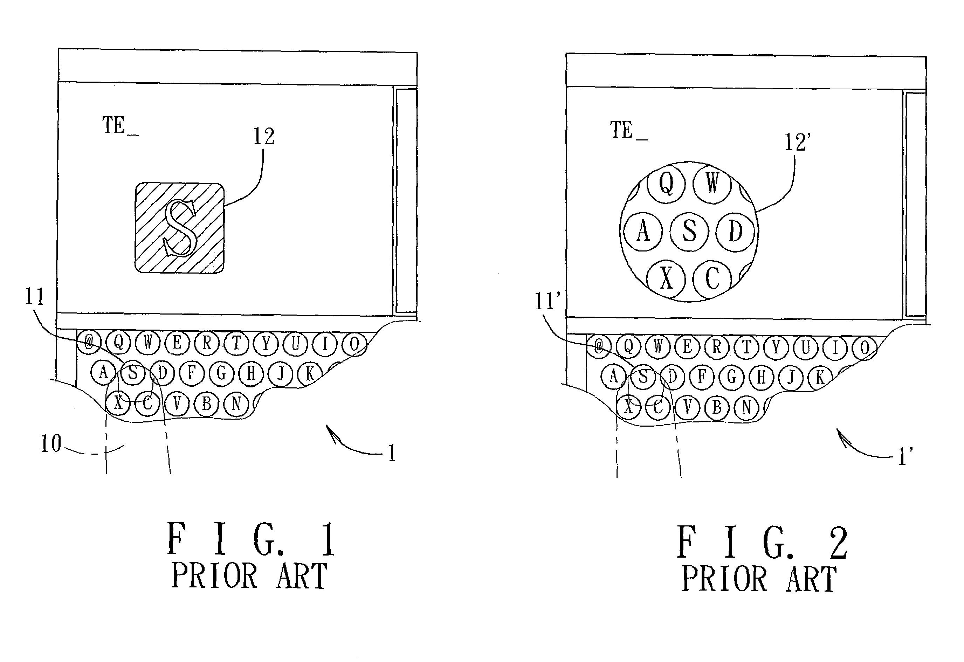

Two virtual keyboards have been proposed heretofore to address the aforementioned problem. In the first virtual keyboard 1, as illustrated in Figure 1, when a touch is detected on a key 11 thereof, the character 12 marked on the key 11 is displayed above the virtual keyboard 1 to indicate that a finger 10 is currently on the key 11. In the second virtual keyboard 1', as illustrated in Figure 2, when a touch is detected on a key 11' thereof, a window 12', which shows the key 11' and some other keys that surround the key 11', is displayed above the virtual keyboard 1'. This, likewise, indicates that a finger is currently on the key 11'.

The two aforementioned conventional virtual keyboards 1, 1' are disadvantageous in that, since the keys 11, 11' thereof are too small and too close together, typing thereon is still error prone.

Therefore, the main object of the present invention is to provide a virtual key input method that can overcome the aforesaid drawback of the prior art.

Another object of the present invention is to provide an electronic device that can overcome the aforesaid drawback of the prior art.

According to an aspect of the present invention, a virtual key input method comprises:
A) displaying a small virtual key that is marked with at least a first symbol; and
B) when a touch is detected on the small virtual key, displaying a large virtual key that is marked with a plurality of second symbols, that replaces the small virtual key, and that has a size larger than the small virtual key.

According to another aspect of the present invention, a virtual key input method comprises:
A) displaying a virtual key that is marked with a plurality of symbols;
B) detecting selection of one of the symbols on the virtual key; and
C) displaying the selected one of the symbols on the virtual key in a prominent manner.

According to yet another aspect of the present invention, an electronic device comprises a touch screen. The touch screen is operable so as to display a small virtual key that is marked with at least a first symbol, so as to detect a touch on the small virtual key, and so as to display a large virtual key that is marked with a plurality of second symbols, that replaces the small virtual key, and that has a size larger than the small virtual key.

Other features and advantages of the present invention will become apparent in the following detailed description of the preferred embodiments with reference to the accompanying drawings, of which:
Figure 1 is a schematic diagram illustrating a conventional virtual keyboard;
Figure 2 is a schematic diagram illustrating another conventional virtual keyboard;

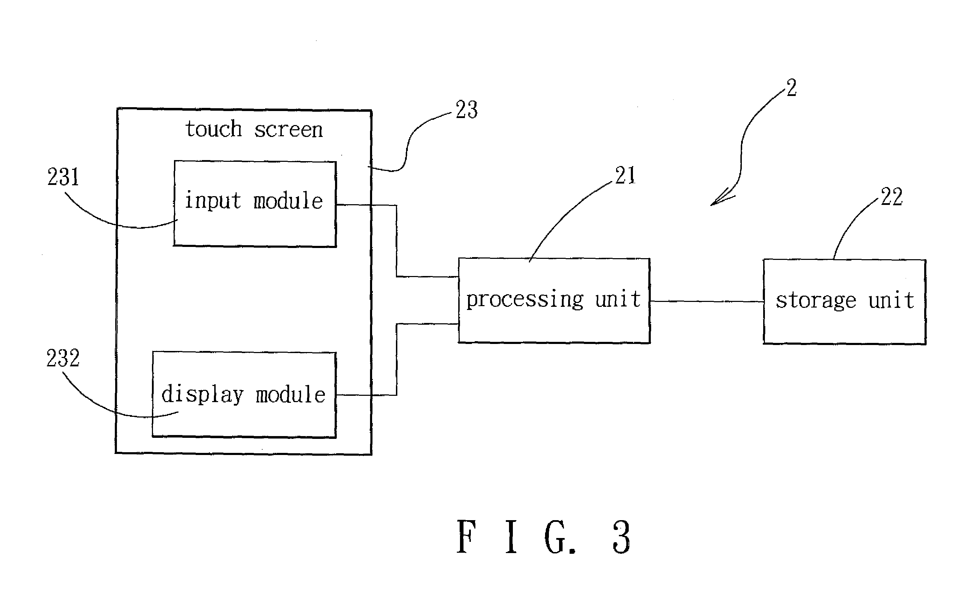

Figure 3 is a block diagramof the preferred embodiment of an electronic device equipped with a touch screen according to this invention;
Figure 4 is a flow chart of the first preferred embodiment of a virtual key input method to be implemented using the electronic device shown in Figure 3 according to this invention;
Figures 5 to 7 are schematic diagrams illustrating selection of a character on a virtual key in the first

### preferred embodiment;

Figure 8 is a flow chart of the second preferred embodiment of a virtual key input method to be implemented using the electronic device shown in Figure 3 according to this invention; and

Figures 9 to 11 are schematic diagrams illustrating selection of a character on a virtual key in the second

### preferred embodiment.

Before the present invention is described in greater detail, it should be noted that like elements are denoted by the same reference numerals throughout the disclosure.

The preferred embodiment of an electronic device 2 according to this invention is shown to include a processing unit 21, a storage unit 22, and a touch screen 23.

The electronic device 2 of this invention may be a personal digital assistant (PDA), a smart phone, or a computer, such as a point of sale (POS) terminal.

The processing unit 21, such as a central processing unit (CPU), is operable so as to run an operating system and so as to execute program instructions stored in the electronic device 2.

The storage unit 22 is connected to the processing unit 21. In this embodiment, the storage unit 22 is a memory device installed in the electronic device 2. Alternatively, the storage unit 22 may be a memory card, such as a Secure Digital (SD) memory card.

The touch screen 23, such as a liquid crystal display (LCD) panel, includes a display module 232 and an input module 231, each of which is connected to the processing unit 21.

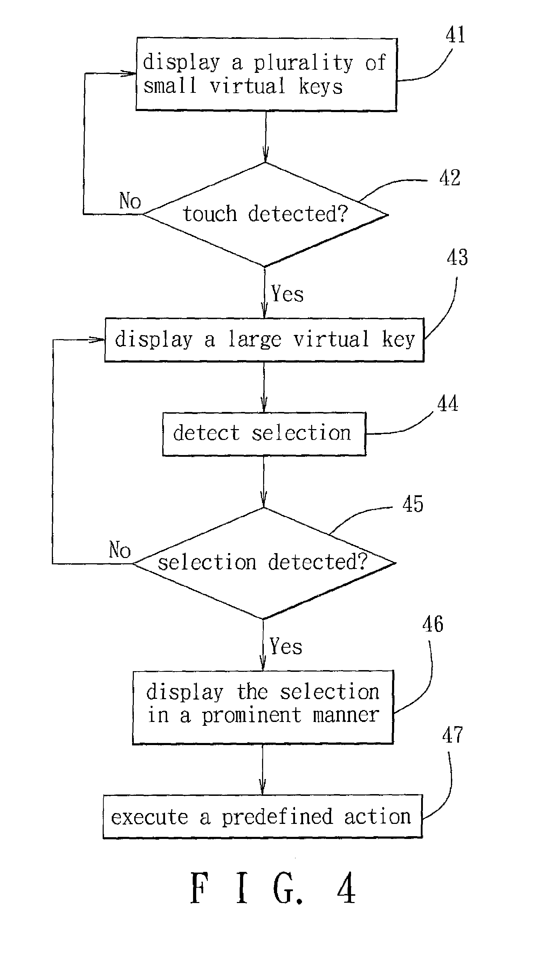

The first preferred embodiment of a virtual key input method to be implemented using the aforementioned electronic device 2 according to this invention will now be described with further reference to Figure 4.

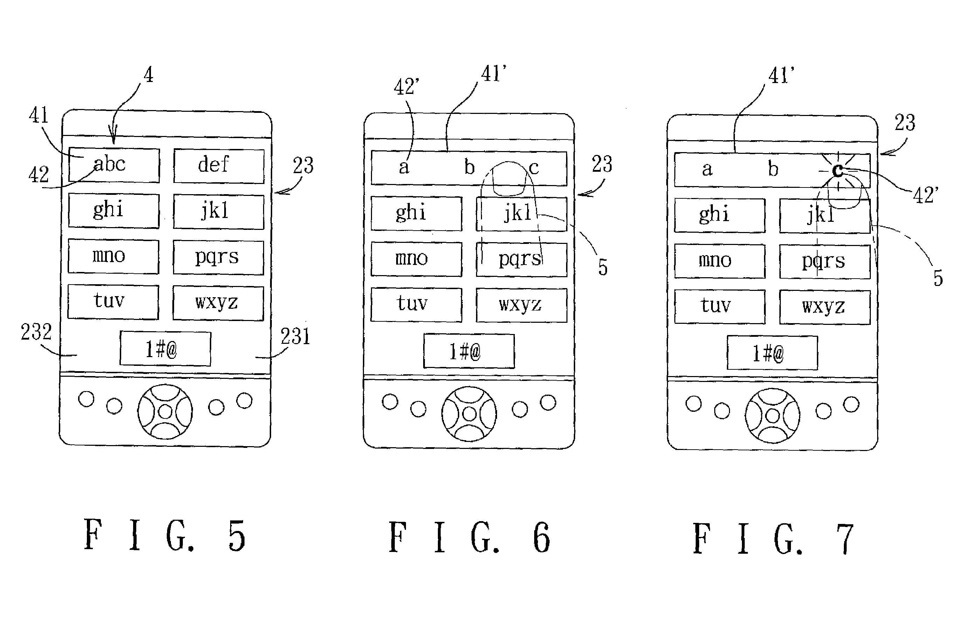

In step 41, with further reference to Figure 5, the display module 232 of the touch screen 23 displays a plurality of small virtual keys 4, each of which is marked with a plurality of first symbols 42.

Since the small virtual keys 4 are identical in construction and operation, only one of the small virtual keys 4, i.e., the key 41, will be described herein.

In this embodiment, each of the first symbols 42 on the small virtual key 41 defines a first distance with an adjacent one of the first symbols 42 on the small virtual key 41. Moreover, in this embodiment, each of the first symbols 42 on the small virtual key 41 is a character.

In step 42, when the input module 231 of the touch screen 23 detects a touch, i.e., a finger 5 (see Figure 6), on the small virtual key 41, the flow proceeds to step 43. Otherwise, the flow goes back to step 41.

In step 43, with further reference to Figure 6, the display module 232 of the touch screen 23 displays a large virtual key 41' that is marked with a plurality of second symbols 42', that replaces the small virtual key 41, and that has a size larger than the small virtual key 41.

In this embodiment, the large virtual key 41' extends in a crosswise direction. Moreover, in this embodiment, the second symbols 42' on the large virtual key 41' are spacedly disposed along a lengthwise direction of the large virtual key 41'. Further, each of the second symbols 42' on the large virtual key 41' is identical to a respective one of the first symbols 42 on the small virtual key 41.

Furthermore, in this embodiment, each of the second symbols 42' on the large virtual key 41' defines a second distance greater than the first distance with an adjacent one of the second symbols 42' on the large virtual key 41'. The arrangement as such permits easier, faster, and accurate selection of each of the second symbols 42' on the large virtual key 41'.

In an alternative embodiment, the large virtual key 41' extends in a lengthwise direction.

In step 44, the input module 231 of the touch screen 23 detects selection of one of the second symbols 42' on the large virtual key 41'.

As illustrated in Figure 7, in this step, the selection of the second symbols 42', e.g., the character "c", on the large virtual key 41' is detected when the input module 231 detects a touch on the second symbol 42'on the large virtual key 41' for a duration that exceeds a predetermined duration of, e.g., 0.5 seconds.

Alternatively, in this step, the selection of the second symbols 42' on the large virtual key 41' is detected when the input module 231 detects a pressure exerted on the second symbol 42'on the large virtual key 41' exceeds a predetermined pressure.

In step 45, when the input module 231 of the touch screen 23 detects the selection of one of the second symbols 42' in step 44, the flow proceeds to step 46. Otherwise, the flow goes back to step 43.

In step 46, the display module 232 of the touch screen 23 displays the selected one of the second symbols 42' on the large virtual key 41' in a prominent manner.

This step may be performed by displaying in boldface, flashing, highlighting, or enclosing within a frame the selected one of the second symbols 42' on the large virtual key 41'.

In step 47, the display module 232 of the touch screen 23 executes a predefined action that corresponds to the selected one of the second symbols 42' on the large virtual key 41'. That is, since the selected one of the second symbols 42' on the large virtual key 41' is the character "c", the displaymodule 232 of the touch screen 23 displays the character "c".

It is noted that the storage unit 22 stores first program instructions therein which when executed cause the electronic device 2 to perform the aforementioned virtual key input method.

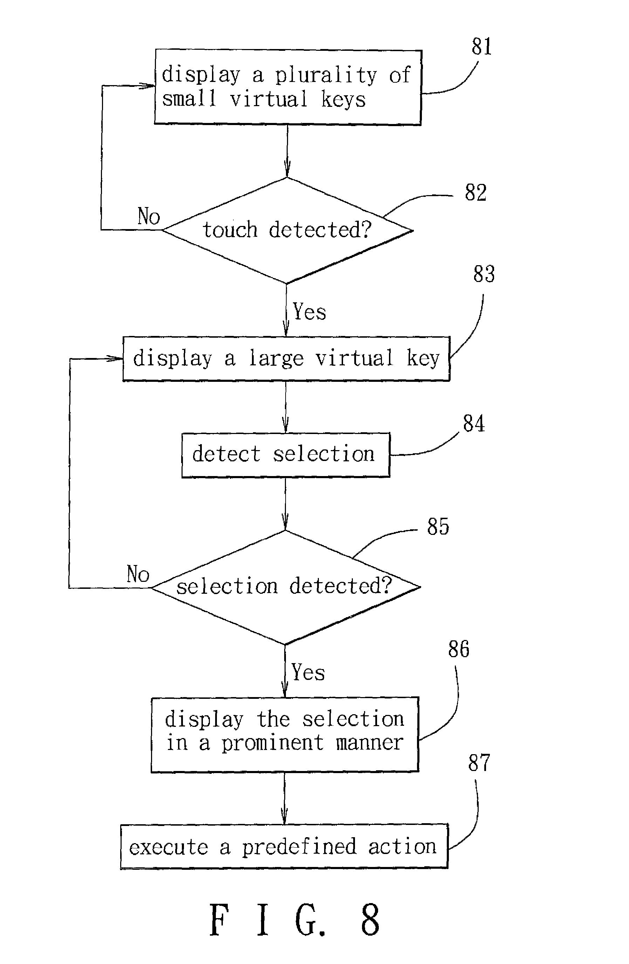

The second preferred embodiment of a virtual key input method to be implemented using the aforementioned electronic device 2 according to this invention will now be described with further reference to Figure 8.

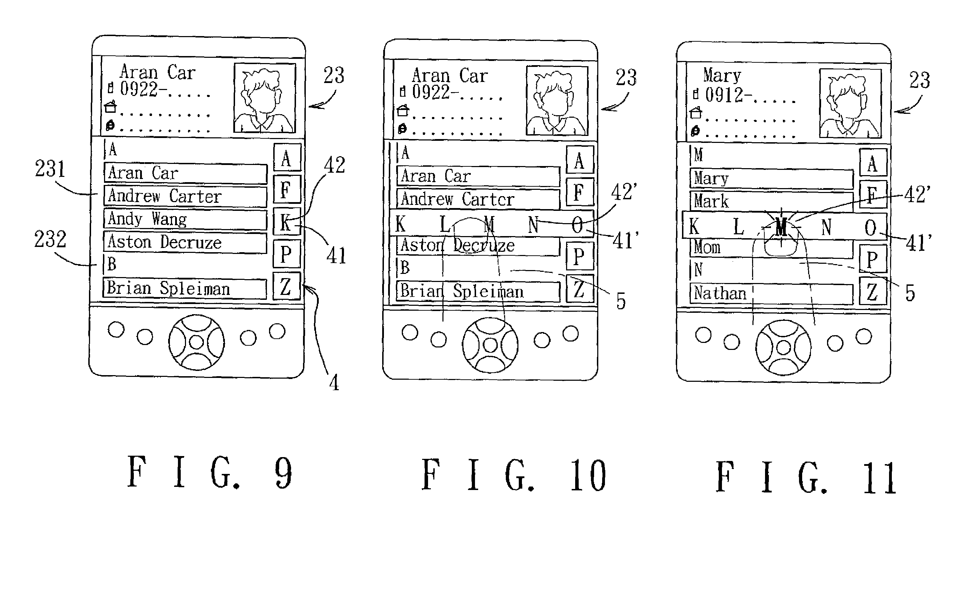

In step 81, with further reference to Figure 9, the display module 232 of the touch screen 23 displays a plurality of small virtual keys 4, each of which is marked with a first symbol 42.

Since the small virtual keys 4 are identical in construction and operation, only one of the small virtual keys 4, i.e., the key 41, will be described herein.

In this embodiment, the first symbol 42 on the small virtual key 41 is a character.

In step 82, when the input module 231 of the touch screen 23 detects a touch, i.e., a finger 5 (see Figure 10), on the small virtual key 41, the flow proceeds to step 83. Otherwise, the flow goes back to step 81.

In step 83, with further reference to Figure 10, the display module 232 of the touch screen 23 displays a large virtual key 41' that is marked with a plurality of second symbols 42', that replaces the small virtual key 41, and that has a size larger than the small virtual key 41.

In this embodiment, the large virtual key 41' extends in a crosswise direction. Moreover, in this embodiment, the second symbols 42' on the large virtual key 41' are spacedly disposed along a lengthwise direction of the large virtual key 41'. Further, one of the second symbols 42', i.e., "K", on the large virtual key 41' is identical to the first symbol 42 on the small virtual key 41.

Furthermore, in this embodiment, each of the second symbols 42' on the large virtual key 41' defines the second distance with an adjacent one of the second symbols 42' on the large virtual key 41'. The arrangement as such permits easier, faster, and accurate selection of each of the second symbols 42' on the large virtual key 41'.

In an alternative embodiment, the large virtual key 41' extends in a lengthwise direction.

In step 84, the input module 231 of the touch screen 23 detects selection of one of the second symbols 42' on the large virtual key 41'.

As illustrated in Figure 11, in this step, the selection of the second symbol 42' , e.g., the character "M", on the on the large virtual key 41' is detected when the input module 231 detects a touch on the second symbol 42' on the large virtual key 41' for a duration that exceeds a predetermined duration, e.g., 0.5 seconds.

Alternatively, in this step, the selection of the second symbols 42' on the large virtual key 41' is detected when the input module 231 detects a pressure exerted on the second symbol 42' on the large virtual key 41' exceeds a predetermined pressure.

In step 85, when the input module 231 of the touch screen 23 detects the selection of one of the second symbols 42' in step 84, the flow proceeds to step 86. Otherwise, the flow goes back to step 83.

In step 86, the display module 232 of the touch screen 23 displays the selected one of the second symbols 42' on the large virtual key 41' in a prominent manner.

This step is performed by displaying in boldface, flashing, highlighting, and enclosing within a frame the selected one of the second symbols 42' on the large virtual key 41'.

In step 87, the display module 232 of the touch screen 23 executes a predefined action that corresponds to the selected one of the second symbols 42' on the large virtual key 41'. That is, since the selected one of the second symbols 42' on the large virtual key 41' is the character "M", the display module 232 of the touch screen 23 displays a name in a contact list that starts with the character "M", e.g., "Mary".

It is noted that the storage unit 22, likewise, stores second program instructions therein which when executed cause the electronic device to perform the aforementioned virtual key input method.

## Claims

1. A virtual key input method, comprising:
A) displaying a small virtual key (41) that is marked with at least a first symbol (42); and
B) when a touch is detected on the small virtual key (41), displaying a large virtual key (41') that is marked with a plurality of second symbols (42'), that replaces the small virtual key (41), and that has a size larger than the small virtual key (41).

2. The virtual key input method as claimed in Claim 1, wherein the first symbol (42) on the small virtual key (41) is identical to one of the second symbols (42') on the large virtual key (41').

3. The virtual key input method as claimed in Claim 2, wherein the second symbols (42') on the large virtual key (41') are spacedly disposed along a lengthwise direction of the large virtual key (41').

4. The virtual key input method as claimed in Claim 1, further comprising:
C) detecting selection of one of the second symbols (42') on the large virtual key (41'); and
D) executing a predefined action that corresponds to the selected one of the second symbols (42') on the large virtual key (41').

5. The virtual key input method as claimed in Claim 4, wherein the small virtual key (41) is marked with a plurality of the first symbols (42), each of which is identical to a respective one of the second symbols (42') on the large virtual key (41').

6. The virtual key input method as claimed in Claim 5, wherein the second symbols (42') on the large virtual key (41') are spacedly disposed along a lengthwise direction of the large virtual key (41').

7. The virtual key input method as claimed in Claim 5, wherein each of the first symbols (42) on the small virtual key (41) defines a first distance with an adj acent one of the first symbols (42) on the small virtual key (41), and each of the second symbols (42') on the large virtual key (41') defines a second distance greater than the first distance with an adjacent one of the second symbols (42') on the large virtual key (41').

8. The virtual key input method as claimed in Claim 4, wherein the first symbol (42) on the small virtual key (41) is identical to one of the second symbols (42') on the large virtual key (41').

9. The virtual key input method as claimed in Claim 4, wherein the large virtual key (41') extends in one of a crosswise direction and a lengthwise direction.

10. The virtual key input method as claimed in Claim 4, further comprising the step of displaying the selected one of the second symbols (42') on the large virtual key (41') in a prominent manner between steps C) and D).

11. The virtual key input method as claimed in Claim 4, wherein, in step C), the selection of the second symbol (42') on the large virtual key (41') is detected when a touch is detected on the second symbol (42') on the large virtual key (41') for a duration that exceeds a predetermined duration.

12. The virtual key input method as claimed in Claim 4, wherein, in step C), the selection of the second symbol (42') on the large virtual key (41') is detected when a pressure exerted on the second symbol (42') on the large virtual key (41') exceeds a predetermined pressure.

13. The virtual key input method as claimed in Claim 4, wherein each of the second symbols (42') on the large virtual key (41') is a character.

14. The virtual key input method as claimed in Claim 2, further comprising:
C) detecting selection of one of the second symbols (42') on the large virtual key (41'); and
D) executing a predefined action that corresponds to the selected one of the second symbols (42') on the large virtual key (41').

15. The virtual key input method as claimed in Claim 1, wherein the small virtual key (41) is marked with a plurality of the first symbols (42), each of which is identical to a respective one of the second symbols (42') on the large virtual key (41'),
each of the first symbols (42) on the small virtual key (41) defining a first distance with an adjacent one of the first symbols (42) on the small virtual key (41),
each of the second symbols (42') on the large virtual key (41') defining a second distance greater than the first distance with an adjacent one of the second symbols (42') on the large virtual key (41').

16. The virtual key input method as claimed in Claim 15, wherein the second symbols (42') on the large virtual key (41') are spacedly disposed along a lengthwise direction of the large virtual key (41').

17. A virtual key input method, comprising:
A) displaying a virtual key (41') that is marked with a plurality of symbols (42');
B) detecting selection of one of the symbols (42') on the virtual key (41'); and
C) displaying the selected one of the symbols (42') on the virtual key (41') in a prominent manner.

18. The virtual key input method as claimed in Claim 17, wherein step C) is performed by one of displaying in boldface, flashing, highlighting, and enclosing within a frame the selected one of the symbols (42') on the virtual key (41').

19. An electronic device, comprising:
a touch screen (23) operable so as to display a small virtual key (41) that is marked with at least a first symbol (42), so as to detect a touch on the small virtual key (41), and so as to display a large virtual key (41') that is marked with a plurality of second symbols (42'), that replaces the small virtual key (41), and that has a size larger than the small virtual key (41).

20. A computer program product comprising:
a machine readable storage medium having program instructions stored therein which when executed cause an electronic device (2) to perform a set of operations including:
A) displaying a small virtual key (41) that is marked with at least a first symbol (42); and
B) when a touch is detected on the small virtual key (41), displaying a large virtual key (41') that is marked with a plurality of second symbols (42'), that replaces the small virtual key (41), and that has a size larger than the small virtual key (41).
